(19) Europäisches Patentamt
European Patent Office
Office européen des brevets

(11) **EP 4 012 668 A2**

(12) **EUROPEAN PATENT APPLICATION**

(43) Date of publication:
**15.06.2022 Bulletin 2022/24**

(21) Application number: **22158687.8**

(22) Date of filing: **25.02.2022**

(51) International Patent Classification (IPC):
**G06V 10/82** (2022.01)   **G06V 30/18** (2022.01)

(52) Cooperative Patent Classification (CPC):
**G06V 10/82; G06V 30/18038**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.09.2021 CN 202111056555**

(71) Applicant: **Beijing Baidu Netcom Science and Technology Co., Ltd.**
**Beijing 100085 (CN)**

(72) Inventors:
• **TANG, Licheng**
  **BEIJING 100085 (CN)**
• **LIU, Jiaming**
  **BEIJING 100085 (CN)**

(74) Representative: **Regimbeau**
**20, rue de Chazelles**
**75847 Paris Cedex 17 (FR)**

(54) **TRAINING METHOD FOR CHARACTER GENERATION MODEL, CHARACTER GENERATION METHOD, APPARATUS AND DEVICE**

(57)   Provided is a training method for a character generation model, and a character generation method, apparatus and device, which relates to the technical field of artificial intelligences, particularly, the technical field of computer vision and deep learning. The specific implementation schemes are: a first training sample is input into a target model to calculate a first loss, where the first training sample includes a first source domain sample word and a first target domain sample word, and content of the first source domain sample word is different from content of the first target domain sample word; a second training sample is input into the target model to calculate a second loss, where the second training sample includes a second source domain sample word and a second target domain sample word, content of the second source domain sample word is the same as content of the second target domain sample word; and a parameter of the character generation model is adjusted according to the first loss and the second loss. The accuracy of fonts generated by the character generation model can be improved in the embodiments of the present disclosure.

```
                                                                    ┌─ S101
┌──────────────────────────────────────────────────────────────────────┐
│   Input a first training sample into a target model to calculate a first loss   │
└──────────────────────────────────────────────────────────────────────┘
                                    │                                ┌─ S102
                                    ▼
┌──────────────────────────────────────────────────────────────────────┐
│  Input a second training sample into the target model to calculate a second loss │
└──────────────────────────────────────────────────────────────────────┘
                                    │                                ┌─ S103
                                    ▼
┌──────────────────────────────────────────────────────────────────────┐
│ Adjust a parameter of the character generation model according to the first loss and │
│                              the second loss                            │
└──────────────────────────────────────────────────────────────────────┘
```

**FIG. 1**

EP 4 012 668 A2

**Description**

**TECHNICAL FIELD**

The present disclosure relates to the technical field of artificial intelligences, particularly, the technical field of computer vision and deep learning, for example, a training method for a character generation model, and a character generation method, apparatus and device.

**BACKGROUND**

The image processing is a practical technology with huge social and economic benefits, and is widely applied to all walks of life and daily life of people.

The style migration of an image means that a style is migrated from an image to another image to synthesize a new artistic image

**SUMMARY**

The present disclosure provides a training method for a character generation model, and a character generation method, apparatus and device.

According to an aspect of the present disclosure, a training method for a character generation model is provided. The method includes: a first training sample is input into a target model to calculate a first loss, where the target model includes the character generation model and a pretrained character classification model, the first training sample includes a first source domain sample word and a first target domain sample word, content of the first source domain sample word is different from content of the first target domain sample word; a second training sample is input into the target model to calculate a second loss, where the second training sample includes a second source domain sample word and a second target domain sample word, content of the second source domain sample word is the same as content of the second target domain sample word; and a parameter of the character generation model is adjusted according to the first loss and the second loss.

According to another aspect of the present disclosure, a character generation method is provided. The method includes: a source domain input word is input into a first generation model of a character generation model to obtain a target domain new word; where the character generation model is obtained by training according to the method of any one of the embodiments of the present disclosure.

According to another aspect of the present disclosure, a training apparatus for a character generation model is provided. The apparatus includes a first loss calculation module, a second loss calculation module and a first parameter adjustment module. The first loss calculation module is configured to input a first training sample into a target model to calculate a first loss, where the target model includes the character generation model and a pretrained character classification model, the first training sample includes a first source domain sample word and a first target domain sample word, content of the first source domain sample word is different from content of the first target domain sample word. The second loss calculation module is configured to input a second training sample into the target model to calculate a second loss, where the second training sample includes a second source domain sample word and a second target domain sample word, content of the second source domain sample word is the same as content of the second target domain sample word. The first parameter adjustment module is configured to adjust a parameter of the character generation model according to the first loss and the second loss.

According to another aspect of the present disclosure, a character generation apparatus is provided. The apparatus includes a character generation model. The character generation module is configured to input a source domain input word into a first generation model of a character generation model to obtain a target domain new word; where the character generation model is obtained by training according to the training method for the character generation model of any one of the embodiments of the present disclosure.

According to another aspect of the present disclosure, an electronic device is provided. The electronic device includes at least one processor and a memory communicatively connected to the at least one processor. The memory stores an instruction executable by the at least one processor, and when the instruction is executed by the at least one processor, the at least one processor is caused to perform the training method for the character generation model described in any one of the embodiments of the present disclosure or the character generation method described in any one of the embodiments of the present disclosure.

According to another aspect of the present disclosure, a non-transitory computer-readable storage medium storing a computer instruction is provided. The computer instruction is configured to cause a computer to perform the training method for the character generation model described in any one of the embodiments of the present disclosure or the character generation method described in any one of the embodiments of the present disclosure.

According to another aspect of the present disclosure, a computer program is provided. The computer program, when executed by a processor, implements the training method for the character generation model described in any one of the embodiments of the present disclosure or performs the character generation method described in any one of the embodiments of the present disclosure.

The accuracy of fonts generated by the character generation model can be improved in the embodiments of the present disclosure.

It should be understood that the contents described in this section are not intended to identify key or critical features of the embodiments of the present disclosure, nor intended to limit the scope of the present disclosure. Other features of the present disclosure will be readily understood from the following description.

## BRIEF DESCRIPTION OF DRAWINGS

The drawings are intended to provide a better understanding of this scheme and are not to be construed as limiting the present disclosure, in which:

FIG. 1 is a schematic diagram of a training method for a character generation model according to an embodiment of the present disclosure;

FIG. 2 is a schematic diagram of a training method for a character generation model according to an embodiment of the present disclosure;

FIG. 3 is an effect diagram of a word generated by a character generation model constrained with a wrong word loss according to an embodiment of the present disclosure;

FIG. 4 is an effect diagram of a word generated by a character generation model constrained with a feature loss according to an embodiment of the present disclosure;

FIG. 5 is an effect diagram of a word generated by a character generation model constrained with a feature loss according to an embodiment of the present disclosure;

FIG. 6 is an effect comparison diagram of words generated by character generation models constrained with feature losses of different layers according to an embodiment of the present disclosure;

FIG. 7 is a schematic diagram of a training method for a character generation model according to an embodiment of the present disclosure;

FIG. 8 is a principle diagram of a training method for a character generation model based on a first training sample according to an embodiment of the present disclosure;

FIG. 9 is a principle diagram of a training method for a character generation model based on a second training sample according to an embodiment of the present disclosure;

FIG. 10 is a structural principle diagram of a character generation model according to an embodiment of the present disclosure;

FIG. 11 is a structural principle diagram of another character generation model according to an embodiment of the present disclosure;

FIG. 12 is a principle diagram of a training method for a character generation model constrained with a generation loss according to an embodiment of the present disclosure;

FIG. 13 is a schematic diagram of a training method for a first generation model according to an embodiment of the present disclosure;

FIG. 14 is an effect diagram of a generation word according to an embodiment of the present disclosure;

FIG. 15 is an effect diagram of a sample word according to an embodiment of the present disclosure;

FIG. 16 is a schematic diagram of a character generation method according to an embodiment of the present disclosure;

FIG. 17 is a schematic diagram of a training apparatus for a character generation model according to an embodiment of the present disclosure;

FIG. 18 is a schematic diagram of a character generation apparatus according to an embodiment of the present disclosure; and

FIG. 19 is a block diagram of an electronic device for implementing a training method for a character generation model and/or a character generation method of an embodiment of the present disclosure.

## DETAILED DESCRIPTION

Exemplary embodiments of the present disclosure are described below with reference to the accompanying drawings, in which various details of embodiments of the present disclosure are included to assist understanding, and which are to be considered as merely exemplary. Therefore, those of ordinary skill in the art will recognize that various changes and modifications of the embodiments described herein may be made without departing from the scope and spirit of the present disclosure. Also, descriptions of well-known functions and structures are omitted in the following description for clarity and conciseness.

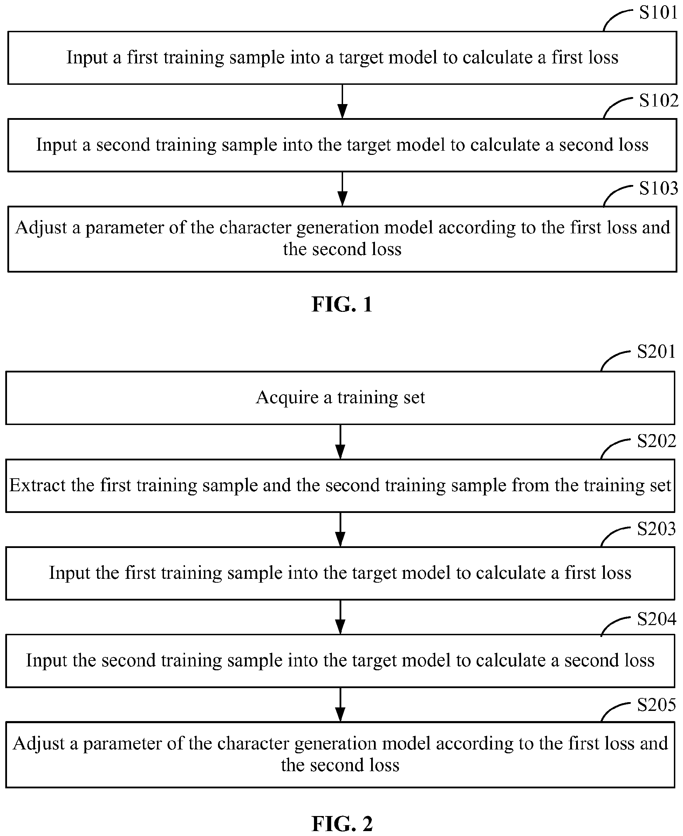

FIG. 1 is a flowchart of a training method for a character generation model according to an embodiment of the present disclosure, this embodiment may be applicable to train a character generation model, and the character generation model is configured to convert a source domain style word into a target domain style word. The method of this embodiment may be executed by a training apparatus for a character generation model, the apparatus may be implemented in software and/or hardware and is for example configured in an electronic device with certain data calculating capabilities, the electronic device may be a client device or a server device, and the client device is such as a mobile phone, a tablet computer, an on-board terminal, a desktop computer.

In S101, a first training sample is input into a target model to calculate a first loss, where the target model includes the character generation model and a pretrained character classification model, the first training sample includes a first source domain sample word and a first target domain sample word, content of the first source domain sample word is different from content of the first target domain sample word.

The character generation model cycle generative adversarial network (CycleGAN, simply referred to as cycle generative network) is used for realizing the style conversion between a source domain and a target domain. The character classification model is used for introducing a loss to constrain a training character generation model.

In the embodiment of the present disclosure, the character generation model may include two generation models and two discrimination models. The two generation models are GeneratorA2B and GeneratorB2A, the GeneratorA2B is used for converting images of style A to images of style B, and the GeneratorB2A is used for converting images of style B to images of style A. The two discrimination models are Discriminator A and Discriminator B, the Discriminator A is used for discriminating whether the converted image is an image of the style A, and the Discriminator B is used for discriminating whether the converted image is an image of the style B.

In a training process of the character generation model, the training objective of the two generation models is to generate an image with a target domain style (or source domain style) as far as possible, and the training objective of the discrimination model is to distinguish an image generated by the generation model from the real target domain image (or source domain image) as far as possible. In the process of training, the generation model and the discrimination model are updated and optimized, so that the two generation models have stronger and stronger capability of realizing the style conversion, and the two discrimination models have stronger and stronger capability of discriminating the generation image and the real image.

In the embodiment of the present disclosure, the character generation model is used for realizing the style conversion between the source domain and the target domain. The source domain sample word is input into the GeneratorA2B of the character generation model to obtain the target domain generation word corresponding to the source domain sample word; and the target domain sample word is input into the GeneratorB2A of the character generation model to obtain the source domain generation word corresponding to the target domain sample word. The source domain sample word and the source domain generation word may refer to an image with a source domain font style, the source domain font style may refer to a regular font of characters, may also refer to a printed font, such as a regular script font, a song script font, or a black script font in Chinese characters, and a Times New Roman font or Calibri font in Western characters, the character may further include a numeric character. The Western character may include characters such as English, German, Russian, or Italian, and are not particularly limited thereto. The target domain generation word and the target domain sample word may refer to an image with a target domain font style. The target domain font style may be a user handwritten font style of characters or other artistic font style. The source domain sample word and the corresponding target domain generation word have the same image content and different style types. The target domain sample word and the corresponding source domain generation word have the same image content and different style types. It should be noted that the words in the embodiments of the present disclosure actually refer to the characters.

In a specific example, for example, an image containing an regular script word "做" is entered into the character generation model, and the character generation model may output an image containing a handwritten word "做".

The character classification model is used for discriminating whether the target generation word and the target domain sample word are the wrong word. For example, a pretrained character classification model may be trained using a Visual Geometry Group 19 (VGG19) network. A training sample of the character classification model may be an image containing multiple fonts, for example, the training sample may be about 450,000 images containing more than 80 fonts and more than 6700 words, and the trained character classification model has been experimentally achieved a classification accuracy of 98% on the data set.

The first source domain sample word in a first sample group is input into the character generation model of the target model to obtain the first target domain generation word, and the first target domain generation word and the first target domain sample word are input into the character classification model to calculate the first loss. The first training sample includes the first source domain sample word and the first target domain sample word, and the content and style types of the first source domain sample word and the first target domain sample word are different. The first source domain sample word and the first target domain generation word have the same content and different style types. The first target domain generation word and the first target domain sample word have different contents and the same style type. The different content of a word actually refers to a different word, for example, the first source domain sample word is "做", and the first target domain sample word is "你".

The first sample group includes the first source domain sample word and the first target domain sample word with different contents, and unpaired data of the first source domain sample word and the first target domain sample word with different contents is used as the input of the model to train the model, so as to increase the ability of the model to convert the style of unknown fonts (not belonging to the training data set), to generate the accurate style conversion word for unknown fonts, to improve the generalization ability of the model, to increase the number of training data, to improve the accuracy of the style conversion of the module, to reduce the cost of the generation of the training data, and to improve the training efficiency of the model.

For the first source domain sample word and the first target domain sample word with different contents, the first target domain sample word may be randomly acquired according to the first source domain sample word, so that the first source domain sample word and the first target domain sample word may be understood as an unpaired sample pair, that is, the first sample group is an unpaired training sample.

In S102, a second training sample is input into the target model to calculate a second loss, where the second training sample includes a second source domain sample word and a second target domain sample word, content of the second source domain sample word is the same as content of the second target domain sample word.

The second source domain sample word in a second sample group is input into the character generation model of the target model to obtain a third target domain generation word, the third target domain generation word and the second target domain sample word are input into the character classification model to calculate the second loss. The second training sample includes the second source domain sample word and the second target domain sample word, and the content and style types of the second source domain sample word and the second target domain sample word are different. The contents of the second source domain sample word, the second target domain sample word and the third target domain generation word are the same, and the style types of the second source domain sample word and the third target domain generation word are different, and the style types of the second target domain sample word and the third target domain generation word are the same.

The second sample group includes the second source domain sample word and the second target domain sample word with the same content, and the paired data of the second source domain sample word and the second target domain sample word with the same content is used as the input of the model to train the model, so that the ability of the model to learn the style conversion may be increased, and the accuracy of the style conversion of the model is improved.

The second source domain sample word and the second target domain sample word with the same content need to query a corresponding second target domain sample word according to the second source domain sample word, so that the second source domain sample word and the second target domain sample word may be understood as the paired sample pair, that is, the second sample group is a paired training sample. Moreover, the target domain font style is the user handwritten word. Correspondingly, before the corresponding second target domain sample word is queried, it is necessary to acquire the user handwritten word provided by the user with authorization, so that the labor cost for generating the training sample is increased.

In S103, a parameter of the character generation model is adjusted according to the first loss and the second loss.

The parameter of the character generation model is adjusted according to the first loss and the second loss to obtain an updated character generation model. For a next group of training sample, the updated character generation model is used, the operation S101 is returned, and a training is performed repeatedly until a preset training stop condition is reached, the parameter of the character generation model is stopped being adjusted, and the trained character generation model is obtained. The training stop condition may include convergence of the sum of the aforementioned losses, convergence of each loss, or the number of iterations being greater than or equal to a set time threshold value.

Due to a fact that the styles of hand-written words in the real world are very different, all situations in reality cannot be covered in the training set. Due to the small coverage of the training samples, the model trained according to the method has poor capability of converting the style of the unknown font.

According to the technical scheme of the present disclosure, the character generation model of the target model is trained on the basis of the unpaired first training sample and the paired second training sample, the number and the range of the training samples are increased by adding the unpaired first training sample, so that the capability of the character generation model for converting the style of the unknown font may be increased, the generalization capability of the model is improved, and moreover, the character generation model is trained by combining the paired training samples, so that the capability of the model for accurately realizing the style conversion can be improved, and thus the accuracy of the style conversion of the model can be improved.

FIG. 2 is a flowchart of another training method for a character generation model according to an embodiment of the present disclosure, which is further optimized and expanded based on the above technical schemes, and may be combined with the above optional implementations. The training method for the character generation model includes the following: a training set is acquired, where the training set includes first training samples and second training samples, where the number of the first training samples is same as the number of the second training samples; and the first training sample and the second training sample are extracted from the training set. Correspondingly, the method includes described below.

In S201, a training set is acquired, where the training set includes first training samples and second training samples, where the number of the first training samples is same as the number of the second training samples.

The training set may be a set of samples trained on the target model, and may be a set of samples trained on the target model at the current iteration round. In the training process, the target model is trained for multiple rounds. For each iteration round, a corresponding training set is configured so as to train the target model in this iteration round. In the current iteration round, a training set corresponding to the current iteration round may be acquired to train the target model, that is, the target model is actually trained by adopting the same number of first training samples and second training samples in each iteration round. The training of the target model may be the training of the character generation model of the target model.

The first training sample is unpaired data and the second training sample is paired data. For the second training sample, the character generation model may learn the same font content features between the second source domain sample word and the paired second target domain sample word. For the first training sample, the first source domain sample word and the first target domain sample word have different font content features, the character generation model cannot learn the font content features. That is, the number of unpaired first training samples is greater than the number of paired second training samples, so that the learning of the font content features occupies less of the training, and thus the model cannot train the font content features. The number of first training samples and the number of second training samples are configured to be the same, the paired data and unpaired data may be balanced, and in a case where the generalization ability is improved, and meanwhile, the accuracy that the style conversion content is not changed is also improved.

Exemplarily, the training set includes 10 groups, the first training sample has 5 groups, and the second training sample has 5 groups.

Moreover, the training set may be configured, the training set includes: the number of groups of the first training samples being slightly less than the number of groups of the second training samples, that is, a difference between the number of groups is less than or equal to a preset group number threshold, for example, the group number threshold is 2. Exemplarily, the number of groups included in the training set is 10, the number of first training samples is 4, and the number of second training samples is 6. As another example, the number of groups included in the training set is 11, the number of first training samples is 5, and the number of second training samples is 6.

In S202, the first training sample and the second training sample are extracted from the training set.

The first training sample and the second training sample included in the training set are acquired, and the first training sample and the second training sample are input into the target model in parallel or in series to train the character generation model.

In S203, the first training sample is input into the target model to calculate a first loss, where the target model includes the character generation model and a pretrained character classification model, the first training sample includes a first source domain sample word and a first target domain sample word, content of the first source domain sample word is different from content of the first target domain sample word.

In S204, the second training sample is input into the target model to calculate a second loss, where the second training sample includes a second source domain sample word and a second target domain sample word, content of the second source domain sample word is the same as content of the second target domain sample word.

In S205, a parameter of the character generation model is adjusted according to the first loss and the second loss.

Optionally, the first loss includes a first wrong word loss, and the second loss includes a second wrong word loss and a feature loss.

The input of the first training sample into the target model does not calculate the feature loss. In the training set, in a case where a proportion of the first training sample is larger than that of the second training sample, the feature loss accounts for less total loss, so that the influence degree on the training of the character generation model is less, and thus the character generation model cannot train the learning ability of the character features of the target domain. Therefore, the first training sample and the second training sample with the same number are configured in the training set, so that the paired data and the unpaired data in the training data may be balanced, the character generation model can well learn the font feature of the target domain, and thus the accuracy of the style conversion is improved. The wrong word loss is used for constraining the wrong word rate of the target domain generation word output by the character generation model, and for example refers to a difference between the word and the correct word. The feature loss refers to a difference between the sample word and the generation word, and for example refers to a difference between the real handwritten word and the generation word of the model.

The first source domain sample word is input into the character generation model to obtain a first target domain generation word; and the second source domain sample word is input into the character generation model to obtain a second target domain generation word. The character classification model is used for detecting whether the target domain sample word is the wrong word. Both the first training sample and the second training sample may calculate a wrong word loss, the first wrong word loss and the second wrong word loss may be collectively referred to as the wrong word loss, and the first target domain generation word and the second target domain generation word may be collectively referred to as the target domain generation word. The target domain generated characters is input into the character classification model to calculate the wrong character loss.

The target domain generation word is input into the character classification model to obtain a generation character vector $\overline{X}=[x_0,x_1\cdots\cdots x_i\cdots\cdots x_n]$ of the target domain generation word, where each element in the vector $\overline{X}$ may represent one character in the training sample and n represents the number of characters in the training sample, for example, the training sample has 6761 words, then n may be equal to 6760. For the first target domain generation word described above, a standard character vector $\overline{Y}=[y_0, y_1\cdots\cdots y_i\cdots\cdots y_n]$ is preset, where each element in $\overline{Y}$ may represent one character in the training sample, then n represents the number of characters in the training sample, for example, the training sample has 6761 words, then n may be equal to 6760.

The standard character vector $\overline{Y}$ represents a vector that should be output by the character classification model when the target domain generation word is input into the character classification model. For example, if the target domain generation word is a "做" word, which is the first of n words in the training sample, then a standard character vector of the "做" word may be represented as $\overline{Y}=[1,0,0 ...... 0]$, the wrong word loss may be determined according to the cross entropy between the generation character vector $\overline{X}$ and the standard character vector $\overline{Y}$ of the first target domain generation word. The wrong word loss may be expressed by equation (1) as follows:

$$\mathrm{L_C}=-\sum_0^n x_i \, log y_i \ (1)$$

$L_C$ represents the wrong word loss, xi represents an element with a subscript of i in the generation character vector, yi represents an element with a subscript of i in the standard character vector, i is an integer greater than or equal to 0 and less than or equal to n, and n represents the number of elements in the generation character vector and the standard character vector.

According to the embodiments of the present disclosure, the wrong word loss may be used for constraining a wrong word rate of the target domain generation word output by the character generation model, so that the probability of the wrong word generation of the character generation model is reduced.

For the second training sample, the second target domain sample word and the second target domain generation word may be input into the character classification model to calculate the feature loss. The second target domain generation word is input into the character classification model to obtain a generation feature map output by a feature layer of the character classification model; the second target domain sample word is input into the character classification model to obtain a sample feature map output by a feature layer of the character classification model; and a feature loss of the character generation model is calculated based on a difference between the generation feature map and the sample feature map of the at least one feature layer.

The character classification model includes at least one feature layer, from which at least one feature layer may be selected, and for any selected feature layer, the difference between the generation feature map of this feature layer and the sample feature map of the feature layer may be calculated. The difference is used for describing the degree of difference between the generation feature map and the sample feature map so as to evaluate whether a generation word of the model is similar to a real handwritten sample word. The feature loss is calculated according to the difference, and whether the generation word of the model is different from the real handwritten sample word or not may be described in more detail from the dimension of the feature.

The selected feature layer may be set as desired, for example, the difference between the generation feature map and the sample feature map of a median feature layer of the multiple feature layers may be selected to calculate the feature loss of the character generation model, such as, a total of 90 feature layers, the median is the 45-th feature layer and the 46-th feature layer. The number of the selected feature layer is 1, and the difference between the generation feature map and the sample feature map of the feature layer may be directly used as the feature loss; the number of the selected feature layers is at least two, a numerical calculation may be conducted on the difference of the feature layers to obtain the feature loss, and the numerical calculation may be a summation calculation, a product calculation or a weighted average calculation or the like.

According to the embodiments of the present disclosure, the feature loss may be used for constraining the similarity degree between the target domain generation word output from the character generation model and the target domain sample word, so that the accuracy of the style conversion of the character generation model is improved.

Optionally, that the feature loss is calculated includes: for the each feature layer in the at least one feature layer included in the character classification model, a pixel difference between the generation feature map and the sample feature map of the each feature layer is calculated to obtain a pixel loss of the at least one feature layer; and the feature loss is calculated according to the pixel loss of the at least one feature layer.

Feature maps output by a same feature layer have the same size, and the pixel difference may be calculated from pixels constituting the feature map so as to calculate a difference between images from a pixel dimension as the pixel loss of the feature layer. That the feature loss is calculated according to the pixel loss of the feature layer may include that: the number of feature layers is one, and the pixel loss is used as the feature loss; the number of feature layers is at least two, and a sum of pixel losses is calculated to serve as the feature loss.

Exemplarily, the pixel loss for each feature layer may be calculated according to an L1 norm loss function, i.e., a sum of the absolute differences between pixels at a same position in a real word and a generation word.

The pixel difference between the generation feature map and the sample feature map is used as the difference between the generation feature map and the sample feature map, the pixel loss is calculated, and the feature loss is determined, the feature loss may be calculated from the pixel dimension, the fine granularity of the calculation of the feature loss is controlled, according to the method, whether the generation word of the model is different from the real handwritten sample word or not is described from pixel details, and the feature loss is calculated to adjust the parameter of the character generation model, so that the character generation model learns more refined font style details of the sample word, and thus the accuracy of the generation word of the character generation model is improved.

Optionally, that the pixel difference between the generation feature map and the sample feature map of the at least one feature layer is calculated includes: for a pixel point at each position of multiple positions in the generation feature map of the at least one feature layer, an absolute value of a difference value between a pixel value of the pixel point at the each position and a pixel value of a pixel point at a corresponding position in the sample feature map is calculated to obtain a difference of the pixel point at the each position; and the pixel difference between the generation feature map and the sample feature map of the at least one feature layer is determined according to the differences of the pixel points at the multiple positions.

For the feature layer, an absolute value of a difference value between the pixel value of the pixel point in the generation feature map and the pixel value of the pixel point in the sample feature map at a same position is calculated, and the absolute value is determined as the difference of the pixel point at the position. Sizes of the generation feature map and the sample feature map are the same, the number of pixels included in the feature map is the same, that is, the number of positions included in the feature map is the same, and a sum of the difference of the pixel point at the multiple positions is determined as the pixel difference between the generation feature map and the sample feature map of the feature layer. The multiple positions may be all positions included in the feature map output by the feature layer and may also be part of screened positions.

In a specific example, sizes of the generation feature map and the sample feature map is 64 * 64, 4096 positions are included, an absolute value of a pixel value difference between the pixel point of the generation feature map and the pixel point of the sample feature map may be calculated for each position, 4096 difference absolute values are obtained, a sum of the 4096 difference absolute values is counted, and the pixel difference between the generation feature map and the sample feature map of the feature layer is obtained. It should be noted that the pixel difference is actually calculated by adopting an L1 norm loss function, and an element of the L1 norm loss function is a pixel value of a pixel point at the i-th position in the feature map.

An absolute value of a difference of a pixel value between corresponding pixel points of two feature maps at each position is calculated, a pixel difference of the feature layer is determined according to the absolute values of multiple positions, and the L1 norm loss is calculated by using pixel values of pixel points at a same position as elements of the L1 norm loss function, and thus the robustness of the character generation model can be improved.

According to the technical scheme of the present disclosure, the difference between the generation feature map and the sample feature map of the at least one feature map in the character classification model is calculated, and the feature loss is determined, whether the generation word of the model is different from the real handwritten sample word or not may be described in more detail from the dimension of the feature, and the parameter of the character generation model is adjusted according to the feature loss calculated at different degrees, so that the character generation model may learn more font details of the real handwritten sample word, and finally, the generation word of the character generation model is more similar to the real handwritten sample word, and thus the accuracy of the generation word of the character generation model is improved.

According to the technical scheme of the present disclosure, the first training sample and the second training sample with the same number are configured to use for each iteration round training, the character generation model of the target model may be trained to maintain the balance between the paired data and the unpaired data, so that not only the generalization ability of the character generation model is improved, but also the same font content feature in the paired data is learned, so as to improve the accuracy of the style conversion content being unchanged.

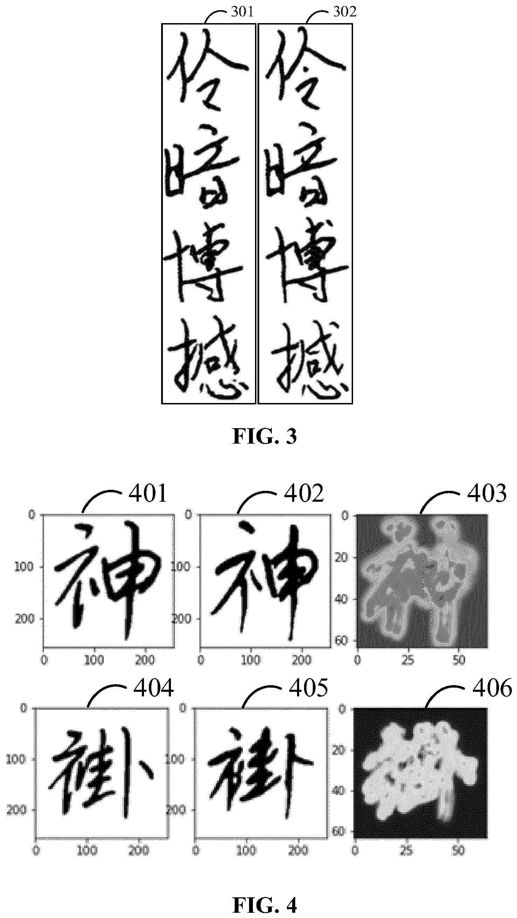

FIG. 3 is an effect comparison diagram of using a wrong word loss according to an embodiment of the present disclosure. As shown in FIG. 3, an image 301 is an image containing handwritten words "伶", "暗", "博" and "撼" generated by a character generation model not constrained with the wrong word loss. An image 302 is an image containing the handwritten words "伶", "暗", "博" and "撼" generated by a character generation model constrained with the wrong word loss. The "伶", "暗", "博" and "撼" words in the image 301 are a bit fewer than the correct "伶", "暗", "博" and "撼" words, respectively, while the "伶", "暗", "博" and "撼" words in the image 302 are the correct "伶", "暗", "博" and "撼" words. Therefore, the correct words can be learned by a character generation model constrained with the wrong word loss, and thus the wrong word rate is reduced.

FIG. 4 is a visualization effect diagram of an embodiment in which a character generation model is constrained by using a feature loss according to an embodiment of the present disclosure. As shown in FIG. 4, a second target domain sample word 401 is a real image containing the handwritten word "神", i.e., the "神" word in the second target domain sample word 401 is the real handwritten word of the user. A second target domain generation word 402 is an image which is generated by the character generation model and contains a handwritten word "神", and the sizes of the second target domain sample word 401 and the second target domain generation word 402 are 256 * 256. A second target domain sample word 404 is a real image containing a handwritten word "褂", i.e., the "褂" word in the second target domain sample word 404 is the real handwritten word of the user. A second target domain generation word 405 is an image which is generated by the character generation model and contains a handwritten word "褂", and sizes of the second target domain sample word 401, the second target domain generation word 402, the second target domain sample word 404 and the second target domain generation word 405 are 256 * 256. The second target domain sample word 401, the second target domain generation word 402, the second target domain sample word 404 and the second target domain generation word 405 are input into a character classification model, a sample feature map and a sample feature map are output on a first preset layer (such as, a 30th feature layer) of the character classification model, respectively, and sizes of the sample feature map and the sample feature map are both 64 * 64. After a pixel difference calculation is performed on the two 64 * 64 images, thermal effect diagrams 403 and 406 representing a difference between the two images are obtained. The thermal effect diagrams 403 and 406 are also 64 * 64 images, the darker the color in the thermal effect diagram 403 indicates that a difference between the second target domain sample word 401 and the second target domain generation word 402 is larger, and the darker the color in the thermal effect diagram 406 indicates that a difference between the second target domain sample word 404 and the second target domain generation word 405 is larger. Therefore, the character generation model is more focused on learning the features of the parts with darker colors in the thermal effect diagrams 403 and 406, so that the capability of the learning feature of the character generation model is improved.

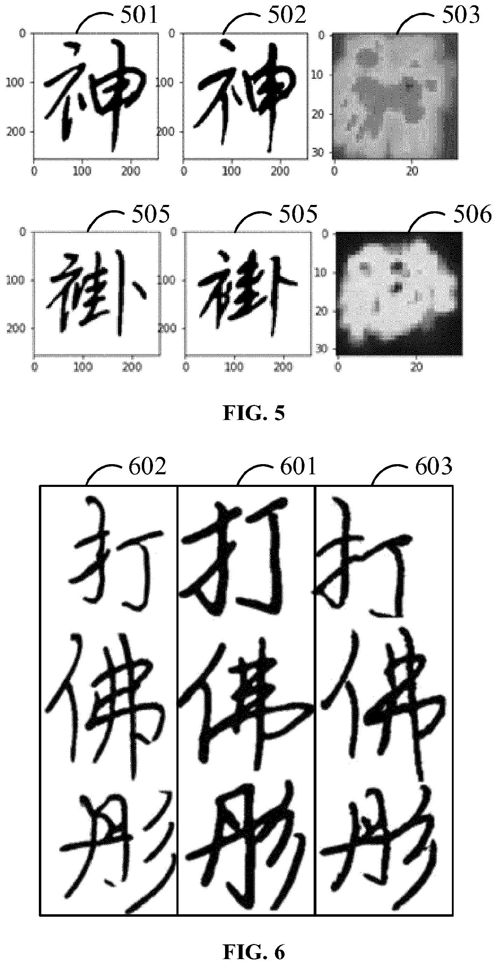

FIG. 5 is a visualization effect diagram of another embodiment in which a character generation model is constrained by using a feature loss according to an embodiment of the present disclosure. As shown in Figure 5, a target domain sample word 501, a target domain generation word 502, a target domain sample word 504 and a target domain generation word 505 are input into a character classification model, a sample feature map and a sample feature map are output on a second preset layer (such as, a 31st feature layer) of the character classification model, respectively, and sizes of the sample feature map and the sample feature map are 32 * 32. After a pixel difference calculation is performed on the two 32 * 32 images, thermal effect diagrams 503 and 506 representing a difference between the two images are obtained. The thermal effect diagrams 503 and 506 are also 32 * 32 images, the darker the color in the thermal effect diagram 503 indicates that a difference between the target domain sample word 501 and the target domain generation word 502 is larger, and the darker the color in the thermal effect diagram 506 indicates that a difference between the target domain sample word 504 and the target domain generation word 505 is larger. Therefore, the character generation model is more focused on learning the features of the parts with darker colors in the thermal effect diagrams 503 and 506, so that the capability of the learning feature of the character generation model is improved.

It should be understood that the thermal effect diagrams 403 and 503 may be combined to collectively cause the character generation model to learn features with greater differences between the target domain sample word 401 and the target domain generation word 402, and features with greater differences between the target domain sample word 501 and the target domain generation word 502, and the thermal effect diagrams 406 and 506 may be combined to learn features with greater differences between the target domain sample word 404 and the target domain generation word 405, as well as learn features with greater differences between the target domain sample word 504 and the target domain generation word 505, so that the capability of the learning feature of the character generation model is improved.

FIG. 6 is an effect comparison diagram of words generated by character generation models constrained with feature losses of different layers according to an embodiment of the present disclosure. As shown in FIG. 6, an image 601 is an image containing handwritten words "打", ""佛" and "彤" and generated through using a character generation model constrained by a feature loss calculated by a non-intermediate feature layer. The image 602 is a real image containing handwritten words "打", "佛" and "彤", that is, the words "打", "佛" and "彤" in the image 602 are real handwritten words of the user. An image 603 is an image containing handwritten words "打", "佛" and "彤" and generated through using a character generation model constrained by a feature loss calculated by an intermediate feature layer. Exemplarily, the character classification model includes 50 feature layers, and the non-intermediate feature layers may be 6 layers, 7 layers and 8 layers; the intermediate feature layer includes 24 layers, 26 layers, and 26 layers. Experimentally, the "打" "佛" and "彤" words in the image 603 learn more features of the "打", "佛" and "彤" words written by the real user (i.e., the "打", "佛" and "彤" words in the image 602) than the "打", "佛" and "彤" words in the image 601, and are more similar to the "打", "佛" and "彤" words written by the real user.

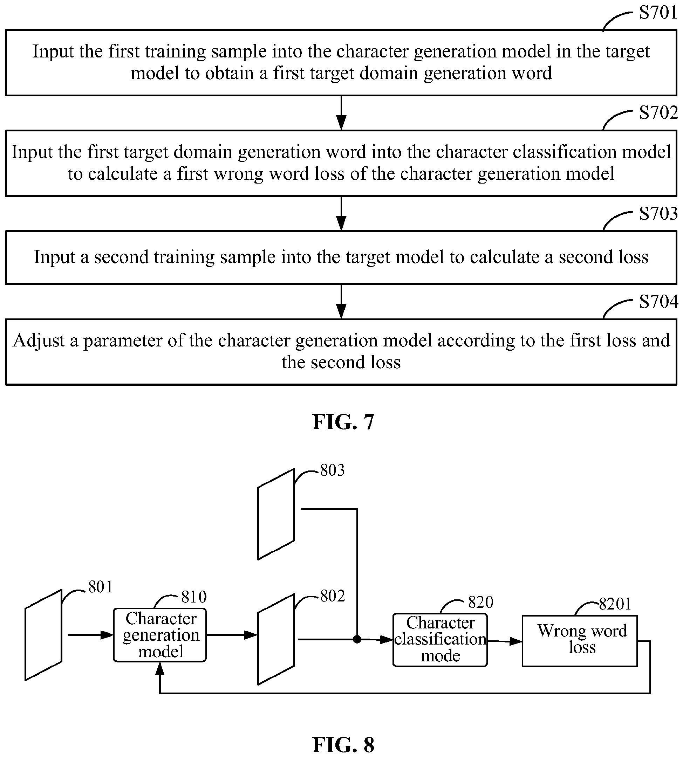

FIG. 7 is a flowchart of another training method for a character generation model according to an embodiment of the present disclosure, which is further optimized and expanded based on the above technical schemes, and may be combined with the above optional implementations. The calculation of the first loss may include the following: the first training sample is input into the character generation model to obtain a first target domain generation word; and the first target domain generation word is input into the character classification model to calculate a first wrong word loss of the character generation model. Correspondingly, the method includes described below.

In S701, the first training sample is input into the character generation model of the target model to obtain a first target domain generation word; the target model includes the character generation model and a pretrained character classification model, the first training sample includes a first source domain sample word and a first target domain sample word, content of the first source domain sample word is different from content of the first target domain sample word.

In S702, the first target domain generation word is input into the character classification model to calculate a first wrong word loss of the character generation model.

For the first training sample, the character classification model does not calculate the feature loss. The first training sample and the second training sample may be pre-labeled in the training set to enable the distinction between the first training sample and the second training sample, so that the first target domain sample word in the first training sample is not entered into the character classification model, whereby the character classification model does not calculate the feature loss for the first target domain sample word, and generates a word only according to the first target domain without feature loss calculation.

In S703, a second training sample is input into the target model to calculate a second loss, where the second training sample includes a second source domain sample word and a second target domain sample word, content of the second source domain sample word is the same as content of the second target domain sample word.

Correspondingly, the second training sample is input into the character generation model to obtain the second target domain generation word, the second target domain generation word is input into the character classification model to calculate the second wrong word loss of the character generation model. The second target domain sample word and the second target domain generation word are input into the character classification model to calculate the feature loss.

In S704, a parameter of the character generation model is adjusted according to the first loss and the second loss.

Optionally, the character generation model includes a first generation model and a second generation model; that the first training sample is input into the character generation model to obtain the first target domain generation word includes: the first source domain sample word is input into the first generation model to obtain the first target domain generation word. The method further includes: the first target domain generation word is input into the second generation model to obtain a first source domain generation word; the first target domain sample word is input into the second generation model to obtain a second source domain generation word, and the second source domain generation word is input into the first generation model to obtain a second target domain generation word; a first generation loss of the character generation model is calculated according to the first training sample, the first target domain generation word, the first source domain generation word, the second target domain generation word and the second source domain generation word; and a parameter of the first generation model is adjusted according to the first generation loss.

The character generation model includes the first generation model, the second generation model, a first discrimination model and a second discrimination model. The first generation model is configured to convert an image with the source domain font style into an image with the target domain font style, and the second generation model is configured to convert the image with the target domain font style into the image with the source domain font style. The first discrimination model is configured to discriminate whether the converted image belongs to the image with the source domain font style, and the second discrimination model is configured to discriminate whether the converted image belongs to the image with the target domain font style.

Based on the structure of the above-described character generation model, the character generation model may include two cyclic working processes. A first cyclic working process of the character generation model is as follows: the first source domain sample word is input into the first generation model to obtain the first target domain generation word, the first target domain generation word is input into the second generation model to obtain the first source domain generation word. A second cyclic working process of the character generation model is as follows: the first target domain sample word is input into the second generation model to obtain the second source domain generation word, and the second source domain generation word is input into the first generation model to obtain the second target domain generation word.

In practice, the character generation model includes the generation model and the discrimination model, and correspondingly, the loss of the character generation model includes a generation loss and a discrimination loss. The discrimination loss is used for training the discrimination model, and the generation loss is used for training the generation model, a model finally applied to the image style conversion in the character generation model is the generation model, that is, the generation loss needs to be calculated for training the generation model. In fact, it should be understood that the first loss further includes a first generation loss; The second loss further includes a second generation loss. The second training sample is used as an example, the character generation model is further configured to calculate the generation loss. In practice, the first training sample is input into the character generation model, and the generation loss is also calculated, which is not repeated here. Among them, the generation penalty may refer to a difference between a classification result and a real value classification result of the case for the discrimination model for the generation word and the sample word, and a difference between the sample word and the generation word.

For the first training sample, the generation loss and the discrimination loss of the character generation model are described below. In practice, the same principle applies to the second training sample, which is not repeated here.

The first cyclic working process of the character generation model is as follows: the first source domain sample word (for example, images containing regular script words, simply referred to as regular script word images) is input into the first generation model to obtain the first target domain generation word (such as, images containing handwritten words, simply handwritten word images). The first target domain generation word (a handwritten word image) is input into the second generation model to obtain the first source domain generation word (a regular script word image).

In the first cyclic working process, the first source domain sample word is a real regular script word, while the first source domain generation word is a model-generated regular script word, which may be referred to as a fake regular script word image. The first target domain generation word is a model generated handwritten image, which may be referred to as a fake handwritten word image. During training, the first source domain sample word may be labeled as Real (e.g., with a value of 1) and the target domain generation word may be labeled as Fake (e.g., with a value of 0).

The first source domain sample word is input into the first discrimination model, for the first discrimination model, the expected output should be 1. If an actual output of the first discrimination model is X, and a loss of the first discrimination model is calculated by using the mean square error, then a part of losses of the first discrimination model may be represented as $(X - 1)^2$.

The first target domain generation word is input into the second discrimination model, for the second discrimination model, the expected output should be 0. If an actual output of the second discrimination model is $Y^*$ (a parameter with * may be used for indicating that the parameter is related to the image generated by the model, and a parameter without * may used for indicating that the parameter is related to the image generated by the model for convenience of differentiation), and a loss of the second discrimination model is calculated by using the mean square error, then a part of losses of the second discrimination model may be represented as $(Y^* - 0)^2$.

The first target domain generating word is input into the second discrimination model, and for the first generating model, the expected output of the second discrimination model is 1. If an actual output of the second discrimination model is $Y^*$, and a loss of the first generation model is calculated by using the mean square error, then a part of losses of the first generation model can be represented as $(Y^* - 1)^2$.

In order to ensure that the first source domain generation word obtained by the input of the first source domain sample word into the first generation model is only a style transformation and the content remains unchanged, a cycle-consistency loss may be added for the first generation model. This loss may be calculated based on the difference between the first source domain sample word and the first source domain generation word. For example, a difference between the pixel values of each corresponding pixel point of the two images of the first source domain sample word and the first source domain generation word is made, and the absolute value is calculated to obtain a difference of each pixel point, and a sum of the difference of all pixel points is calculated to obtain the cycle-consistency loss of the first generation model, which may be recorded as $L1_{A2B}$.

Therefore, a part of losses of the first generation model is $(Y^* - 1)^2$, and the other loss is $L1_{A2B}$. A sum of the two losses is regarded as a total loss $L_{A2B}$ of the first generation model, and the total loss $L_{A2B}$ of the first generation model may be represented by the following equation (2):

$$L_{A2B} = (Y^* - 1)^2 + L1_{A2B} \quad (2)$$

The second cyclic working process of the character generation model includes: the first target domain sample word (such as, images containing handwritten words, simply referred as handwritten word images) is input into the second generation model to obtain the second source domain generation word (such as, images containing regular script words, or simply referred as regular script word images). The second source domain generation word (regular script word image) is input into the first generation model to obtain the second target domain generation word (handwritten word image).

During the second cyclic working process, the first target domain sample word is a real handwritten word image, and the second target domain generation word is a handwritten word image generated by the model, which can be referred as a fake handwritten word image. The second source domain generation word is a regular script word image generated by the model, which may referred as a fake regular script word. During the training process, the first target domain sample word is labelled as Real (such as, a value of 1), and the second source domain generation word is labelled as Fake (such as, a value of 0).

The first target domain sample word is input into the second discrimination model, for the second discrimination model, the expected output should be 1. If an actual output of the second discrimination model is Y, a loss of the second discrimination model is calculated by using the mean square error, then part of losses of the second discrimination model may be represented as $(Y - 1)^2$.

The second source domain generation word is input into the first discrimination model, for the first discrimination model, the expected output should be 0. If an actual output of the first discrimination model is $X^*$, a loss of the first discrimination model is calculated by using the mean square error, then a part of losses of the first discrimination model may be represented as $(X^* - 0)^2$.

The second source domain generation word is input into the first discrimination model, and for the second generation model, the expected output of the first discrimination model is 1. If an actual output of the first discrimination model is $X^*$, and a loss of the second generation model is calculated by using the mean square error, then a part of losses of the second generation model may be represented as $(X^* - 1)^2$.

In order to ensure that the second target domain generation word obtained by the input of the first target domain sample word into the second generation model is only style conversion and the content remains unchanged, a cycle-consistency loss may be added for the second generation model. This loss may be calculated based on the difference between the first target domain sample word and the second target domain generation word. For example, a difference between the pixel values of each corresponding pixel point of the two images of the sample word in the first target domain and the generation word in the second target domain is made, and the absolute value is calculated to obtain a difference of each pixel point, and a sum of the difference of all pixel points is calculated to obtain the cycle-consistency loss of the second generated model, which may be recorded as $L1_{B2A}$.

Therefore, a part of losses of the second generation model is $(X^* - 1)^2$, and the other loss is $L1_{B2A}$. A sum of the two losses is regarded as a total loss $L_{B2A}$ of the second generation model, and the total loss $L_{B2A}$ of the second generation model may be represented by the following equation (3):

$$L_{B2A} = (X^* - 1)^2 + L1_{B2A} \quad (3)$$

A sum of the total loss $L_{A2B}$ of the first generation model and the total loss $L_{B2A}$ of the second generation model may be used as the generation loss of the character generation model, and the generation loss may be represented by the following equation (4):

$$L_G = (Y^* - 1)^2 + L1_{A2B} + (X^* - 1)^2 + L1_{B2A} \quad (4)$$

$L_G$ represents the generation loss of the character generation model, which may be used for adjusting the parameter of the first generation model and the second generation model.

The discrimination loss of the character generation model includes the discrimination loss of the first discrimination model and the discrimination loss of the second discrimination model.

If a part of losses of the first discrimination model is $(X - 1)^2$ and the other part of losses of the first discrimination model is $(X^* - 0)^2$, a sum of the two parts of losses may be used as the discrimination loss of the first discrimination model, and the discrimination loss $L_A$ of the first discrimination model may be represented by the following equation (5):

$$L_A = (X - 1)^2 + (X^* - 0)^2 \quad (5)$$

The discrimination loss $L_A$ of the first discrimination model may be used for adjusting the parameters of the first discrimination model.

Similarly, if a part of losses of the second discrimination model is $(Y^* - 0)^2$, and the other part of losses of the second discrimination model is $(Y - 1)^2$, ae sum of the two parts of losses may be used as the discrimination loss of the second discrimination model, and the discrimination loss $L_B$ of the second discrimination model may be represented by the following equation (6):

$$L_B = (Y - 1)^2 + (Y^* - 0)^2 \quad (6)$$

The discrimination loss $L_B$ of the second discrimination model may be used for adjusting the parameters of the second discrimination model.

The font style of the image output by the first generation model may be more fit with the target domain font style by adopting the generation loss to constrain the first generation model, in a case where the target domain font stele is the handwritten word, the font style of the generation word may be substantially consistent with the font style of the real handwritten word, which can improve the authenticity of the output handwritten word and thus improve the accuracy of the style conversion.

Optionally, that the parameter of the character generation model is adjusted according to the first loss and the second loss includes: the parameter of the first generation model is adjusted according to the first loss and the second loss.

In fact, the first generation model of the trained character generation model will be applied to style-converted character generation. The first generation model is configured to convert image from the source domain style to the target domain style. The first generation model is adjusted by the first loss and the second loss, the conversion accuracy from the source domain style to the target domain style of the image may be accurately achieved.

Optionally, the source domain sample word is an image with a source domain font style, and the target domain sample word is an image with a target domain font style.

The source domain sample word is an image generated by words with the source domain font style. The target domain sample word is an image generated by words with the target domain font style. The source domain font style is different from the target domain font style. Exemplarily, the source domain font style is a printed font, for example, for the Chinese character font, the source domain font style is a song script font, a regular script font, a black script font, or a clerical script font; the target domain font style is an artistic font style such as a real handwritten font style of the user.

The source domain sample word is configured as the image with the source domain font style, and the target domain sample word is configured as the image with the target domain font style, conversion of different font styles may be realized, and the number of fonts with new styles is increased.

The first generation model is used to generate the target domain generation word based on the source domain sample word, so that multiple styles of font generation can be achieved, the cycle consistency loss is introduced, the pixel level difference between the model generation word and the target word reduced by the first generation model is improved, and the discrimination model is used to introduce the generation loss, which can make the font style of the model generation words conform to the font style of the target domain better, and moreover, the character classification model is used to introduce the wrong word loss and the feature loss, which can improve the ability of the first generation model to learn the font feature and reduce the probability of generating wrong words.

According to the technical scheme of the present disclosure, the first training sample and the second training sample with the same number are configured to use for each iteration round training, the character generation model of the target model may be trained to maintain the balance between the paired data and the unpaired data, so that not only the generalization ability of the character generation model is improved, but also the same font content feature in the paired data is learned, so as to improve the accuracy of the style conversion content being unchanged.

FIG. 8 is a principle diagram of a training method for a character generation model based on a first training sample according to an embodiment of the present disclosure, as shown in FIG. 8, a first source domain sample word 801 in the first training sample is input into a character generation model 810 to obtain a first target domain generation word 802, and the first target domain generation word 802 and a first target domain sample word 803 in the first training sample are input into a character classification model 820 to calculate a first wrong word loss 8201.

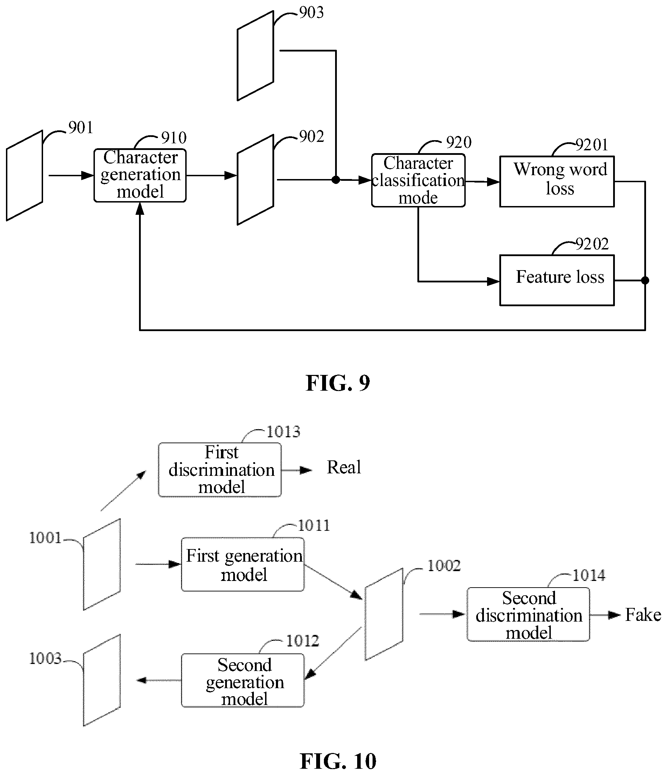

FIG. 9 is a principle diagram of a training method for a character generation model based on a second training sample according to an embodiment of the present disclosure, as shown in FIG. 9, a second source domain sample word 901 in the second training sample is input into a character generation model 910 to obtain a second target domain generation word 902, and the second target domain generation word 902 and a second target domain sample word 903 in the second training sample are input into a character classification model 920 to calculate a second wrong word loss 9201 and a feature loss 9202.

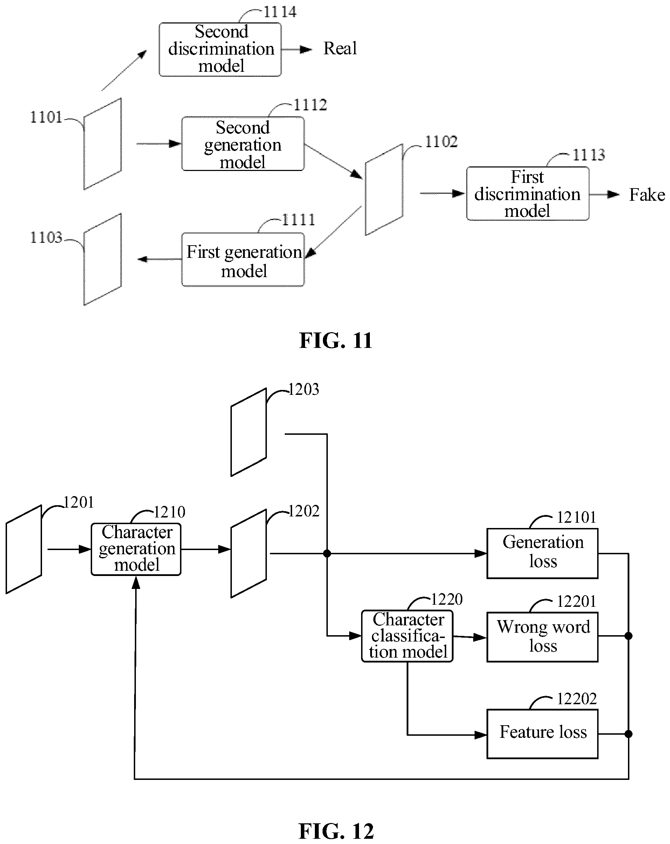

FIG. 10 is a structural principle diagram of a character generation model according to an embodiment of the present disclosure; FIG. 11 is a structural principle diagram of another character generation model according to an embodiment of the present disclosure. FIG. 10 and FIG. 11 are principle diagrams of two cyclic working processes of the character generation model.

As shown in FIG. 10, the character generation model 1010 includes a first generation model 1011, a second generation model 1012, a first discrimination model 1013, and a second discrimination model 1014. FIG. 10 shows a first cyclic working process of the character generation model 1010: a first source domain sample word 1001 is input into the first generation model 1011 to obtain a first target domain generation word 1002, and the first target domain generation word is input into the second generation model 1012 to obtain a first source domain generation word 1003. The first source domain sample word 1001 is input into the first discrimination model 1013, and the expected output should be 1 for the first discrimination model 1013. If an actual output of the first discrimination model 1013 is X, a loss of the first discrimination model is calculated using the mean square error, and a part of losses of the first discrimination model 1013 may be represented as $(X - 1)^2$. The first target domain generation word 1002 is input into the second discrimination model 1014, and the expected output should be 0 for the second discrimination model 1014. If an actual output of the second discrimination model 1014 is $Y^*$, a loss of the second discrimination model 1014 is calculated using the mean square error, then a part of losses of the second discrimination model may be represented as $(Y^* - 0)^2$. The first target domain generation word 1003 is input into the second discrimination model 1014, which is expected to output 1 for the first generation model 1011. If the actual output of the second discrimination model 1014 is $Y^*$, a loss of the first generation model 1011 is calculated using the mean square error, then a part of losses of the first generation model 1011 may be represented as $(Y^* - 1)^2$.

As shown in FIG. 11, the character generation model includes a first generation model 1111, a second generation model 1112, a first discrimination model 1113, and a second discrimination model 1114. FIG. 11 shows a second cyclic working process of the character generation model 1110: a first target domain sample word 1101 is input into the second generation model 1112 to obtain a second source domain generation word 1102, and a second source domain generation word 1101 is input into the first generation model 1111 to obtain a second target domain generation word 1103. The first target domain sample word 1101 is input into the second discrimination model 1114, and the expected output should be 1 for the second discrimination model 1114. If an actual output of the second discrimination model 1114 is Y, a loss of the second discrimination model 1114 is calculated using the mean square error, then a part of losses of the second discrimination model 1114 may be represented as $(Y - 1)^2$. The second source domain generation word 1102 is input into the first discrimination model 1113, and the expected output should be 0 for the first discrimination model 1113. If an actual output of the first discrimination model 1113 is $X^*$, a loss of the first discrimination model 1113 is calculated using the mean square error, and a part of losses of the first discrimination model 1113 may be represented as $(X^* - 0)^2$. The second source domain generation word 1103 is input into the first discrimination model 1113, which is expected to output 1 for the second generation model 1112. If the actual output of the first discrimination model 1113 is $X^*$, a loss of the second generation model 1112 is calculated using the mean square error, then a part of losses of the second generation model 1112 may be represented as $(X^* - 1)^2$.

FIG. 12 is a principle diagram of a training method for a character generation model constrained by using a generation loss according to an embodiment of the present disclosure, as shown in FIG. 12, a second training sample 1201 is used as an example, the character generation model 1210 is further configured to calculate a generation loss 12101, and in fact, a first training sample is input into the character generation model 1210 to also calculate the generation loss, however, not calculate the feature loss, which is not repeated here.

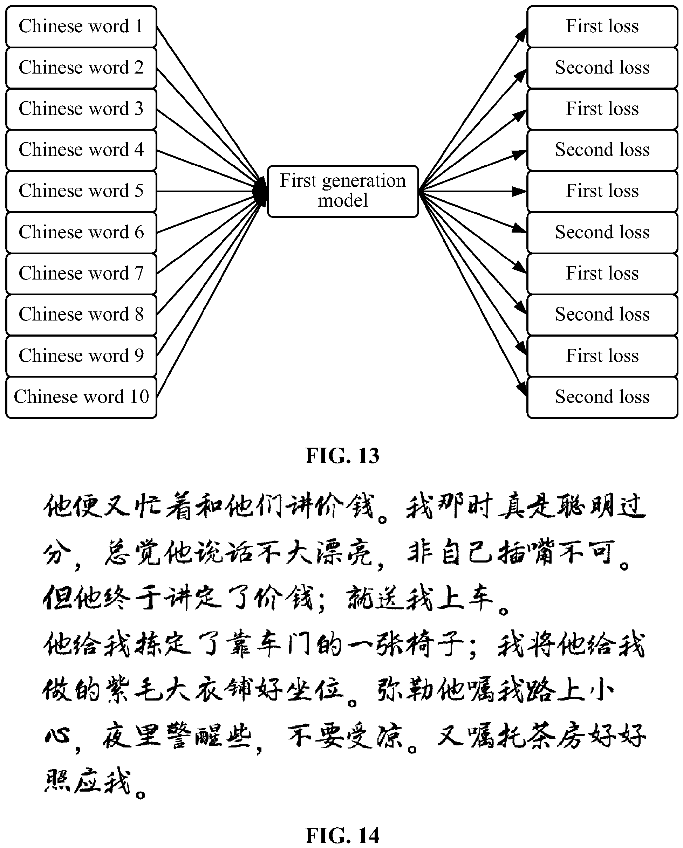

FIG. 13 is a schematic diagram of a training method for a first generation model according to an embodiment of the present disclosure, as shown in FIG. 13, in an iteration round, a Chinese word of a first training sample is input into the first generation model to obtain a first loss, and the first generation model is adjusted; and a Chinese word of a second training sample is input into the first generation model to obtain a second loss, and the first generation model is adjusted. Meanwhile, a number ratio of the first training sample to the second training sample may be adjusted to be 1: 1, and correspondingly, as shown in FIG. 13, a Chinese word 1, a Chinese word 3, a Chinese word 5, a Chinese word 7 and a Chinese word 9 are the first training sample; a Chinese word 2, a Chinese word 4, a Chinese word 6, a Chinese word 8 and a Chinese word 10 are the second training sample, and they are input into the first generation model so as to calculate a ratio of the number of first losses and the number of second losses is 1: 1. The first loss may include a first generation loss and a first wrong word loss; the second loss may include a second generation loss, a second wrong word loss, and a feature loss. The first generation model is adjusted according to the first loss and the second loss, so that the generalization ability of the first generation model can be improved, and meanwhile, the accuracy of the style conversion can also be improved.

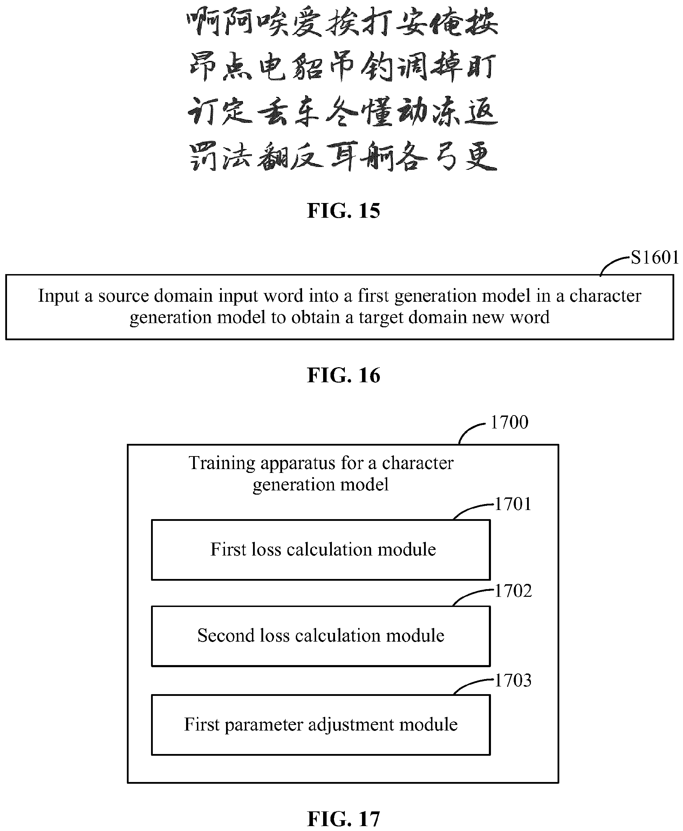

FIG. 14 is an effect diagram of a generation word according to an embodiment of the present disclosure; and FIG. 15 is an effect diagram of a sample word according to an embodiment of the present disclosure. As shown in FIGS. 14 to 15, a word shown in FIG. 14 is a word generated by the first generation model, a word shown in FIG. 15 is a real handwritten word of the user, and the word in FIG. 14 has a font style of the real handwritten word of the user. A font style of the generation word in FIG. 14 is substantially consistent with the font style of the real handwritten word in FIG. 15, for scribbled handwritten words, the style migration model generates the correct words.

FIG. 16 is a flowchart of a character generation method according to an embodiment of the present disclosure, and this embodiment may be applicable to a case that a source domain style word is converted into a target domain style word according to a training character generation model to generate a new word. The method of this embodiment may be executed by a character generation apparatus, the apparatus is implemented in software and/or hardware and is for example configured in an electronic device with certain data calculating capabilities. The electronic device may be a client device or a server device, and the client device is such as a mobile phone, a tablet computer, an on-board terminal, a desktop computer.

In S1601, a source domain input word is input into a first generation model of a character generation model to obtain a target domain new word; where the character generation model is obtained by training according to the training method for the character generation model of any one of the embodiments of the present disclosure.

The source domain input word may be an image of words that need to be converted to a target domain font style.

The character generation model is obtained by training according to the training method of the character generation model. The target domain new word may refer to a word with the target domain font style of content corresponding to the source domain input word. For example, the source domain input word is a regular script word image, and the target domain new word is a handwritten word image, the handwritten word image can be obtained by inputting the regular script word image into the character generation model, that is, the target domain new word.

In the case of obtaining the target domain new word, a font library may be built based on the target domain new word. For example, new words generated by the character generation model are stored and a font library with the handwritten font style is established. The font library may be applied to an input method, and the user can directly acquire words with the handwritten font style by using the input method based on the font library, which can satisfy the diverse needs of the user and improve the user experience.

According to the technical scheme of the present disclosure, the source domain input word is acquired and input into the first generation model of the character generation model so as to obtain the target domain new word, so that the source domain input word is accurately converted into the target domain new word, the accuracy of the generation of the target domain new word can be improved, the efficiency of the generation of the target domain new word can be improved, and the labor cost for generating the target domain new word is reduced.

According to an embodiment of the present disclosure, FIG. 17 is a structure diagram of a training apparatus for a character generation model according to an embodiment of the present disclosure, and the embodiment of the present disclosure is applicable to training a character generation model, the character generation model is configured to convert a source domain style word into a target domain style word. The apparatus is implemented in software and/or hardware and is for example configured in an electronic device with certain data calculating capabilities.

A training apparatus 1700 for a character generation model as shown in FIG. 17 includes a first loss calculation module 1701, a second loss calculation module 1702 and a first parameter adjustment module 1703.

The first loss calculation module 1701 is configured to input a first training sample into a target model to calculate a first loss, where the target model includes the character generation model and a pretrained character classification model, the first training sample includes a first source domain sample word and a first target domain sample word, content of the first source domain sample word is different from content of the first target domain sample word.

The second loss calculation module 1702 is configured to input a second training sample into the target model to calculate a second loss, where the second training sample includes a second source domain sample word and a second target domain sample word, content of the second source domain sample word is the same as content of the second target domain sample word.

The first parameter adjustment module 1703 is configured to adjust a parameter of the character generation model according to the first loss and the second loss.

According to the technical scheme of the present disclosure, the character generation model of the target model is trained on the basis of the unpaired first training sample and the paired second training sample, the number and the range of the training samples are increased by adding the unpaired first training sample, so that the capability of the character generation model for converting the style of the unknown font may be increased, the generalization capability of the model is improved, and moreover, the character generation model is trained by combining the paired training samples, so that the capability of the model for accurately realizing the style conversion can be improved, and thus the accuracy of the style conversion of the model can be improved.

Further, the training apparatus for the character generation model further includes a training set acquisition module and a training sample acquisition module. The training set acquisition module is configured to acquire a training set, where the training set includes first training samples and second training samples, wherein a number of the first training samples is same as a number of the second training samples. The training sample acquisition module is configured to extract the first training sample and the second training sample from the training set.

Further, the first loss includes a first wrong word loss, and the second loss includes a second wrong word loss and a feature loss.

Further, the first loss calculation module 1701 includes a first target domain generation word output unit and a first wrong word loss calculation unit. The first target domain generation word output unit is configured to input the first training sample into the character generation model to obtain a first target domain generation word. The first wrong word loss calculation unit is configured to input the first target domain generation word into the character classification model to calculate a first wrong word loss of the character generation model.

Further, the character generation model includes a first generation model and a second generation model.

The first wrong word loss calculation unit includes a first source domain generation word output subunit, the first source domain generation word output subunit is configured to input the first source domain sample word into the first generation model to obtain the first target domain generation word.

The training apparatus for the character generation model further includes a first source domain generation word generation module, a second target domain generation word output module, a first generation loss calculation module and a second parameter adjustment module. The first source domain generation word generation module is configured to input the first target domain generation word into the second generation model to obtain a first source domain generation word. The second target domain generation word output module is configured to input the first target domain sample word into the second generation model to obtain a second source domain generation word, and input the second source domain generation word into the first generation model to obtain a second target domain generation word. The first generation loss calculation module is configured to calculate a first generation loss of the character generation model according to the first training sample, the first target domain generation word, the first source domain generation word, the second target domain generation word and the second source domain generation word. The second parameter adjustment module is configured to adjust a parameter of the first generation model according to the first generation loss.

Further, the first parameter adjustment module 1703 includes a first generation model parameter adjustment unit. The first generation model parameter adjustment unit is configured to adjust the parameter of the first generation model according to the first loss and the second loss.

Further, the source domain sample word is an image with a source domain font style, and the target domain sample word is an image with a target domain font style.

The above-described training apparatus for the character generation model may perform the training method for the character generation model provided in any of the embodiments of the present disclosure, and has corresponding functional modules and beneficial effects of performing the training method for the character generation model.

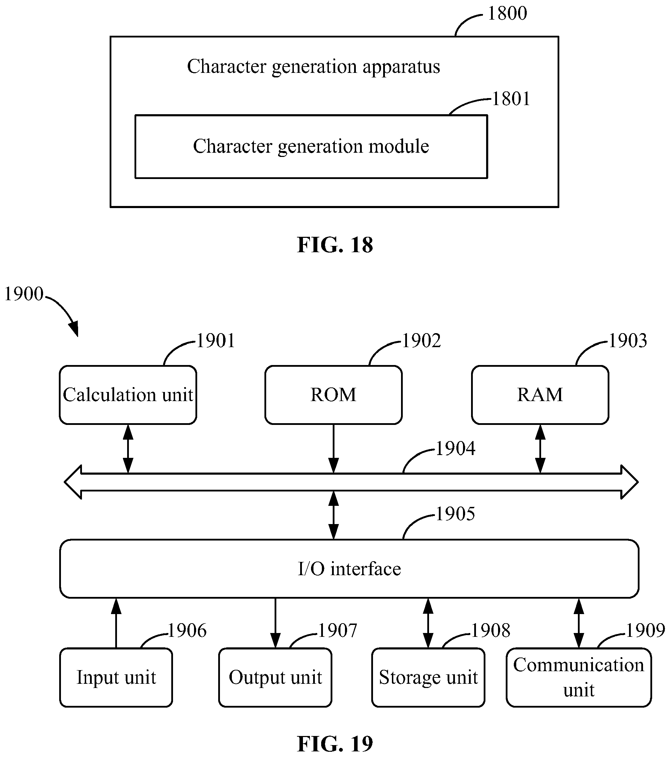

According to an embodiment of the present disclosure, FIG. 18 is a structure diagram of a character generation apparatus according to an embodiment of the present disclosure, and the embodiment of the present disclosure is applicable to a case that a source domain style word is converted into a target domain style word according to a training character generation model to generate a new word. The apparatus is implemented in software and/or hardware and is for example configured in an electronic device with certain data calculating capabilities.

The character generation apparatus 1800 as shown in FIG. 18 includes a character generation module 1801, the character generation module 1801 is configured to input a source domain input word into a first generation model of a character generation model to obtain a target domain new word; where the character generation model is obtained by training according to the training method for the character generation model of any one of the embodiments of the present disclosure.

According to the technical scheme of the present disclosure, the source domain input word is acquired and input into the first generation model of the character generation model so as to obtain the target domain new word, so that the source domain input word is accurately converted into the target domain new word, the accuracy of the generation of the target domain new word can be improved, the efficiency of the generation of the target domain new word can be improved, and the labor cost for generating the target domain new word can be reduced.

The above-described character generation apparatus may perform the character generation method provided in any of the embodiments of the present disclosure, and has corresponding function modules and beneficial effects of performing the character generation method.

In the technical scheme of the present disclosure, processes of the collection, storage, use, processing, transmission, provision and disclosure and the like of user's personal information involved are all in compliance with the provisions of relevant laws and regulations, and do not violate the public order and good customs.

According to the embodiments of the present disclosure, the present disclosure further provides an electronic device, a readable storage medium and a computer program.

FIG. 19 shows a schematic block diagram of an exemplary electronic device 1900 that may be used for implementing the embodiments of the present disclosure. The electronic device is intended to represent various forms of digital computers, such as laptops, desktops, workstations, personal digital assistants, servers, blade servers, mainframe computers, and other appropriate computers. The electronic device may also represent various forms of mobile devices, such as personal digital processing, cellphones, smartphones, wearable devices, and other similar calculation devices. The components shown herein, their connections and relationships between these components, and the functions of these components, are illustrative only and are not intended to limit implementations of the present disclosure described and/or claimed herein.

As shown in FIG. 19, the device 1900 includes a calculation unit 1901, the calculation unit 1901 may perform various appropriate actions and processes according to a computer program stored in a read-only memory (ROM) 1902 or a computer program loaded from a storage unit 1908 into a random-access memory (RAM) 1903. The RAM 1903 may also store various programs and data required for the operation of the device 1900. The calculation unit 1901, the ROM 1902, and the RAM 1903 are connected via a bus 1904. An input/output (I/O) interface 1905 is also connected to the bus 1904.

Multiple components in the device 1900 are connected to the I/O interface 1905, and the multiple components include an input unit 1906 such as a keyboard or a mouse, an output unit 1907 such as various types of displays or speakers, the storage unit 1908 such as a magnetic disk or an optical disk, and a communication unit 1909 such as a network card, a modem or a wireless communication transceiver. The communication unit 1909 allows the device 1900 to exchange information/data with other devices over a computer network such as the Internet and/or various telecommunication networks.

The calculation unit 1901 may be a variety of general-purpose and/or dedicated processing assemblies having processing and calculating capabilities. Some examples of the calculation unit 1901 include, but are not limited to, a central processing unit (CPU), a graphics processing unit (GPU), a special-purpose artificial intelligence (AI) calculation chip, a calculation unit executing machine learning model algorithms, a digital signal processor (DSP) and any suitable processor, controller and microcontroller. The calculation unit 1901 performs the various methods and processes described above, such as the training method for the character generation model or the character generation method. For example, in some embodiments, the training method for the character generation model or the character generation method may be implemented as computer software programs tangibly embodied in a machine-readable medium, such as the storage unit 1908. In some embodiments, part or all of computer programs may be loaded and/or installed on the device 1900 via the ROM 1902 and/or the communication unit 1909. When the computer program is loaded to the RAM 1903 and executed by the calculation unit 1901, one or more steps of the green wave speed determination method described above may be executed. Alternatively, in other embodiments, the calculation unit 1901 may be configured, in any other suitable manners (e.g., by means of firmware), to perform the green wave speed determination method.

Various implementations of the systems and technologies described above herein may be achieved in digital electronic circuit systems, integrated circuit systems, field-programmable gate arrays (FPGAs), application-specific integrated circuits (ASICs), application-specific standard products (ASSPs), systems on chip (SOCs), complex programmable logic devices (CPLDs), computer hardware, firmware, software, and/or combinations thereof. These various implementations may include implementation in one or more computer programs, and the one or more computer programs are executable and/or interpretable on a programmable system including at least one programmable processor, the programmable processor may be a special-purpose or general-purpose programmable processor for receiving data and instructions from a memory system, at least one input device and at least one output device and transmitting data and instructions to the memory system, the at least one input device and the at least one output device.

Program codes for implementing the methods of the present disclosure may be written in any combination of one or more programming languages. These program codes may be provided for the processor or controller of a general-purpose computer, a special-purpose computer, or another programmable data processing device to enable the functions/operations specified in a flowchart and/or a block diagram to be implemented when the program codes are executed by the processor or controller. The program codes may be executed entirely on a machine, partly on the machine, as a stand-alone software package, partly on the machine and partly on a remote machine, or entirely on the remote machine or server.

In the context of the present disclosure, a machine-readable medium may be a tangible medium that may contain or store a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any appropriate combination of the foregoing. More specific examples of the machine-readable storage medium may include an electrical connection based on one or more wires, a portable computer diskette, a hard disk, a random access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination of the foregoing.

To provide the interaction with a user, the systems and technologies described here may be implemented on a computer. The computer has a display device (e.g., a cathode-ray tube (CRT) or liquid-crystal display (LCD) monitor) for displaying information to the user; and a keyboard and a pointing device (e.g., a mouse or a trackball) through which the user may provide input into the computer. Other kinds of devices may also be used for providing for interaction with the user; for example, feedback provided to the user may be sensory feedback in any form (such as, visual feedback, auditory feedback, or haptic feedback); and input from the user may be received in any form (including acoustic input, speech input, or haptic input).

The systems and technologies described here may be implemented in a calculation system including a back-end component (e.g., a data server), or a calculation system including a middleware component (such as, an application server), or a calculation system including a front-end component (e.g., a client computer having a graphical user interface or a web browser through which the user may interact with the implementations of the systems and technologies described herein), or a calculation system including any combination of such back-end component, middleware component, or front-end component. The components of the system may be interconnected by any form or medium of digital data communication (for example, a communication network). Examples of the communication network include a local area network (LAN), a wide area network (WAN), and the Internet.

The computer system may include clients and servers. A client and a server are generally remote from each other and typically interact through the communication network. A relationship between the clients and the servers arises by virtue of computer programs running on respective computers and having a client-server relationship to each other. The server may be a cloud server, and may also be a server of a distributed system, or a server combining a blockchain.

It should be understood that various forms of the flows shown above, reordering, adding or deleting steps may be used. For example, the steps described in the present disclosure may be executed in parallel, sequentially or in different orders as long as the desired result of the technical scheme provided in the present disclosure may be achieved. The execution sequence of these steps is not limited herein.

The above implementations should not be construed as limiting the protection scope of the present disclosure. It should be understood by those skilled in the art that various modifications, combinations, sub-combinations and substitutions may be made, depending on design requirements and other factors. Any modification, equivalent replacement, and improvement made within the spirit and principle of the present disclosure should be included within the protection scope of the present disclosure.

**Claims**

1. A training method for a character generation model, comprising:

inputting (S101) a first training sample into a target model to calculate a first loss, wherein the target model comprises the character generation model and a pretrained character classification model, the first training sample comprises a first source domain sample word and a first target domain sample word, content of the first source domain sample word is different from content of the first target domain sample word;

inputting (S102, S204, S703) a second training sample into the target model to calculate a second loss, wherein the second training sample comprises a second source domain sample word and a second target domain sample word, content of the second source domain sample word is the same as content of the second target domain sample word; and

adjusting (S103, S205, S704) a parameter of the character generation model according to the first loss and the second loss.

2. The method of claim 1, further comprising:

acquiring (S201) a training set, wherein the training set comprises first training samples and second training samples, wherein a number of the first training samples is same as a number of the second training samples; and extracting (S202) the first training sample and the second training sample from the training set.

3. The method of claim 1, wherein the first loss comprises a first wrong word loss, and the second loss comprises a second wrong word loss and a feature loss.

4. The method of claim 1, wherein calculating the first loss comprises:

inputting (S701) the first training sample into the character generation model to obtain a first target domain generation word; and
inputting (S702) the first target domain generation word into the character classification model to calculate a first wrong word loss of the character generation model.

5. The method of claim 4, wherein the character generation model comprises a first generation model and a second generation model, inputting the first training sample into the character generation model to obtain the first target domain generation word comprises:
inputting the first source domain sample word into the first generation model to obtain the first target domain generation word;
the method further comprising:

inputting the first target domain generation word into the second generation model to obtain a first source domain generation word;
inputting the first target domain sample word into the second generation model to obtain a second source domain generation word, and inputting the second source domain generation word into the first generation model to obtain a second target domain generation word;
calculating a first generation loss of the character generation model according to the first training sample, the first target domain generation word, the first source domain generation word, the second target domain generation word and the second source domain generation word; and
adjusting a parameter of the first generation model according to the first generation loss.

6. The method of claim 5, wherein adjusting (S103, S205, S704) the parameter of the character generation model according to the first loss and the second loss comprises:
adjusting the parameter of the first generation model according to the first loss and the second loss.

7. The method of any one of claims 1 to 6, wherein the source domain sample word is an image with a source domain font style, and the target domain sample word is an image with a target domain font style.

8. A character generation method, comprising:
inputting (S1601) a source domain input word into a first generation model of a character generation model to obtain a target domain new word; wherein the character generation model is obtained by training according to the training method for the character generation model of any one of claims 1 to 7.

9. A training apparatus (1700) for a character generation model, comprising:

a first loss calculation module (1701), which is configured to input a first training sample into a target model to calculate a first loss, wherein the target model comprises the character generation model and a pretrained character classification model, the first training sample comprises a first source domain sample word and a first target domain sample word, content of the first source domain sample word is different from content of the first target domain sample word;
a second loss calculation module (1702), which is configured to input a second training sample into the target model to calculate a second loss, wherein the second training sample comprises a second source domain sample word and a second target domain sample word, content of the second source domain sample word is the same as content of the second target domain sample word; and

a first parameter adjustment module (1703), which is configured to adjust a parameter of the character generation model according to the first loss and the second loss.

10. The apparatus of claim 9, further comprising:

a training set acquisition module, which is configured to acquire a training set, wherein the training set comprises first training samples and second training samples, wherein a number of the first training samples is same as a number of the second training samples; and
a training sample acquisition module, which is configured to extract the first training sample and the second training sample from the training set.

11. The apparatus of claim 9, wherein the first loss comprises a first wrong word loss, and the second loss comprises a second wrong word loss and a feature loss.

12. A character generation apparatus (1800), comprising:
a character generation module (1801), which is configured to input a source domain input word into a first generation model of a character generation model to obtain a target domain new word; wherein the character generation model is obtained by training according to the training apparatus for the character generation model of any one of claims 9 to 11.

13. An electronic device, comprising:

at least one processor; and
a memory communicatively connected to the at least one processor;

wherein the memory stores an instruction executable by the at least one processor, and the instruction, when executed by the at least one processor, causes the at least one processor to perform the training method for the character generation model of any one of claims 1 to 7 or the character generation method of claim 8.

14. A non-transitory computer readable storage medium storing a computer instruction, wherein the computer instruction is configured to cause a computer to perform the training method for the character generation model of any one of claims 1 to 7 or the character generation method of claim 8.

15. A computer program, comprising a computer program, wherein the computer program, when executed by a processor, implements the training method for the character generation model of any one of claims 1 to 7 or the character generation method of claim 8.

S101

Input a first training sample into a target model to calculate a first loss

S102

Input a second training sample into the target model to calculate a second loss

S103

Adjust a parameter of the character generation model according to the first loss and the second loss

**FIG. 1**

S201

Acquire a training set

S202

Extract the first training sample and the second training sample from the training set

S203

Input the first training sample into the target model to calculate a first loss

S204

Input the second training sample into the target model to calculate a second loss

S205

Adjust a parameter of the character generation model according to the first loss and the second loss

**FIG. 2**

**FIG. 3**

**FIG. 4**

**FIG. 5**

**FIG. 6**

┌─────────────────────────────────────────────────────────────────────────┐
│ Input the first training sample into the character generation model in the target │
│ model to obtain a first target domain generation word │
└─────────────────────────────────────────────────────────────────────────┘
S701

┌─────────────────────────────────────────────────────────────────────────┐
│ Input the first target domain generation word into the character classification model │
│ to calculate a first wrong word loss of the character generation model │
└─────────────────────────────────────────────────────────────────────────┘
S702

┌─────────────────────────────────────────────────────────────────────────┐
│ Input a second training sample into the target model to calculate a second loss │
└─────────────────────────────────────────────────────────────────────────┘
S703

┌─────────────────────────────────────────────────────────────────────────┐
│ Adjust a parameter of the character generation model according to the first loss and │
│ the second loss │
└─────────────────────────────────────────────────────────────────────────┘
S704

**FIG. 7**

**FIG. 8**

~903

~901

~910
Character
generation
model

~902

~920
Character
classification
mode

~9201
Wrong word
loss

~9202
Feature loss

**FIG. 9**

~1013
First
discrimination
model → Real

1001

~1011
First generation
model

1002

~1014
Second
discrimination
model → Fake

~1012
Second
generation
model

1003

**FIG. 10**

**FIG. 11**

**FIG. 12**

| | | |
|---|---|---|
| Chinese word 1 | | First loss |
| Chinese word 2 | | Second loss |
| Chinese word 3 | | First loss |
| Chinese word 4 | | Second loss |
| Chinese word 5 | First generation model | First loss |
| Chinese word 6 | | Second loss |
| Chinese word 7 | | First loss |
| Chinese word 8 | | Second loss |
| Chinese word 9 | | First loss |
| Chinese word 10 | | Second loss |

**FIG. 13**

他便又忙着和他们讲价钱。我那时真是聪明过分，总觉他说话不大漂亮，非自己插嘴不可。但他终于讲定了价钱；就送我上车。他给我拣定了靠车门的一张椅子；我将他给我做的紫毛大衣铺好坐位。弥勒他嘱我路上小心，夜里警醒些，不要受凉。又嘱托茶房好好照应我。

**FIG. 14**

啊阿唉爱挨打安俺按
昂点电貂吊钓调掉盯
订定丢车冬懂动冻返
罚法翻反耳舸各弓更

**FIG. 15**

S1601

Input a source domain input word into a first generation model in a character generation model to obtain a target domain new word

**FIG. 16**

1700

Training apparatus for a character generation model

1701

First loss calculation module

1702

Second loss calculation module

1703

First parameter adjustment module

**FIG. 17**

1800

Character generation apparatus

1801

Character generation module

**FIG. 18**

1900

1901

Calculation unit

1902

ROM

1903

RAM

1904

1905

I/O interface

1906

Input unit

1907

Output unit

1908

Storage unit

1909

Communication unit

**FIG. 19**